# EUROPEAN PATENT SPECIFICATION

(11) **EP 3 290 831 B1**
(45) Date of publication and mention of the grant of the patent: **27.03.2019**
(21) Application number: 17186338.4
(22) Date of filing: 15.08.2017
(51) Int. Cl.: F25C 1/10, F25C 1/20, F25C 1/24, F25C 5/06, F25D 21/08, F25D 21/14

(54) **ICE MAKING ASSEMBLY WITH TWIST ICE TRAY AND DIRECTIONAL DEFROST**
EISMASCHINENANORDNUNG MIT DREHEISSCHALE UND GERICHTETEM ABTAUUNG
ENSEMBLE DE FABRICATION DE GLACE COMPORTANT UN BAC À GLACE VRILLÉ ET UN DÉGIVRAGE DIRECTIONNEL

(30) Priority: 26.08.2016 US 201615248520
(43) Date of publication of application: 07.03.2018
(73) Proprietor: Whirlpool Corporation, Benton Harbor, MI 49022 (US)
(72) Inventor: Alshourbagy, Mohamed, 21025 Comerio (IT); Chandrashekaran, Arivazhagan, 21025 Comerio (IT); McCollum, Kylie M., 21025 Comerio (IT); Pohl, Nicholas L., 21025 Comerio (IT); Sathyamurthi, Vijaykumar, 21025 Comerio (IT); Tenbarge, Andrew M., 21025 Comerio (IT)
(74) Representative: Spina, Alessandro

(56) References cited:
- WO-A1-2008/026843
- US-A- 5 182 916
- US-A1- 2009 126 391

## Description

### SUMMARY OF THE DISCLOSURE

Ice management of an ice making assembly US 2009/126391 A1. It is an object of the present invention to improve the efficiency of existing ice making assembly. The invention is disclosed in the appended claims.

An aspect of the present disclosure is generally directed to an ice making assembly that includes: an ice piece forming tray having a motor engaging end, a distal end, a first side, a second side and a bottom surface and a plurality of ice piece making compartments divided by divider walls; and a plurality of defrost water water channels. At least one defrost water water channel is positioned at least substantially parallel to or along an axis of rotation of the ice piece forming tray and along at least one of the motor engaging end and the distal end. Each of the plurality of defrost water water channels engage one another in fluid communication with one another and are configured to receive defrost water from a plurality of heat sinks engaged to the bottom surface of the ice making compartments and deliver defrost water to a drain or defrost water catch tray positioned at at least one of the distal end and the motor engaging end.

Yet another aspect of the present disclosure is generally directed toward a refrigerator that includes: an ice piece making assembly that produces ice pieces. The ice piece making assembly includes: an ice piece forming tray having a motor engaging end, a distal end, a first side, a second side, a bottom surface, a plurality of ice piece making compartments divided by divider walls, and a plurality of heat sinks engaged to the bottom surface of the ice making compartments and deliver defrost water to a drain or defrost water catch tray positioned at at least one of the distal end and the motor engaging end; and an ice piece forming tray canopy spaced a distance above the ice piece forming tray where the ice piece forming tray canopy includes a heater and a temperature sensor.

Another aspect of the present disclosure is generally directed to a method of making ice pieces that includes the steps of: providing an ice making assembly having: a motor; an ice piece forming tray having a motor engaging end, a distal end, a first side, a second side and a bottom surface; and a plurality of ice piece making compartments divided by divider walls; a plurality of metal heat sinks engaged to the bottom surface of the ice making compartments, wherein the heat sinks have a plurality of downwardly extending and spaced apart metal fins that extend away from the bottom surface of each ice piece making compartment; at least one defrost water water channel wherein at least one defrost water water channel is positioned at least substantially parallel to or along an axis of rotation of the ice piece forming tray and along at least one of the motor engaging end and the distal end wherein the defrost water water channels engage one another in fluid communication with one another; placing an ice piece forming tray canopy a spaced distance above and coving the ice piece forming tray wherein the ice piece forming tray canopy includes a heater and a temperature sensor; filling at least one of the ice piece making compartments with an amount of water; oscillating the ice piece forming tray; using the temperature sensor and the heater to maintain an air temperature above the ice piece making compartments above freezing during at least a portion of the time for forming the ice pieces; moving air below 0 degrees Celsius through spaces between the downwardly extending spaced apart fins; forming the ice pieces within the ice piece making compartments directionally with freezing starting from a portion of the ice piece making compartments distal from the canopy and proximate the heat sink and toward a top of the ice piece making compartments; rotating the ice piece forming tray with one or more formed ice pieces spaced within the one or more ice piece making compartments that were filled with water to invert the ice piece forming tray until the tray is at least about 160 degrees rotated from its level, flat, and ice piece forming compartment upwardly facing position; and twisting the ice piece forming tray to release the one or more ice pieces within the ice piece forming tray. The step of rotating the ice piece forming tray includes moving the fins into closer proximity to the canopy and into a volume of air proximate the canopy that has a temperature above freezing due to heat applied to the volume of air proximate the canopy from the heater such that frost on the metal fins melts and enters at least one of the defrost water water channels.

### BRIEF DESCRIPTION OF THE FIGURES

The foregoing summary, as well as the following detailed description of the disclosure, will be better understood when read in conjunction with the appended drawings. In addition, drawings are not necessarily to scale. Certain features of the disclosure may be exaggerated in scale or shown in schematic form in the interest of clarity and conciseness.
In the drawings:
Fig. 1 is an upper perspective view of a refrigerator as disclosed;
Fig. 1A is an elevated front view of a French door bottom mount refrigerator freezer incorporating an ice making assembly of the present disclosure;
Figure 2 is a perspective view of an embodiment of a refrigerator as disclosed with the fresh food (refrigerated) compartment doors open;
Fig. 2A is an elevated front view of a French door bottom mount refrigerator freezer with the fresh food (refrigerated) compartment doors open;
Figure 3 is a front view of a refrigerator as disclosed with the fresh food (refrigerated) compartment doors open;
Figure 4 is an exploded view of the icemaker according to an aspect of the present disclosure;
Figure 5 shows a heater according to an aspect of the present disclosure;
Figure 6 shows a thermistor according to an aspect of the present disclosure;
Figure 7 shows a heater bracket according to an aspect of the present disclosure;
Figure 8 shows a bracket/frame cover according to an aspect of the present disclosure;
Fig. 9 is a perspective view of a thermistor and heater engaged with the heater bracket;
Fig. 10 is a bottom perspective view of the heater bracket engaged with the interior surface of the bracket cover according to an aspect of the present disclosure;
Fig. 11 is a perspective view of an assembled ice maker system according to an aspect of the present disclosure;
Fig. 12 is a partially cut away perspective view of the channel forming frame and ice making portion according to an aspect of the present disclosure;
Fig. 13 is an elevated end view of the channel forming frame and ice making portion;
Fig. 14 is a cross-sectional view of the engagement pegs/tabs engaged with the ice making portion of the present disclosure taken along line XIV-XIV in Fig. 15;
Fig. 15 is a perspective view of the channel forming frame, motor assembly section, and ice making portion according to an aspect of the present disclosure;
Fig. 16. is a perspective view showing the assembly of the present disclosure with the bracket/frame cover removed;
Fig. 17A is an elevated end view of the ice making assembly of the present disclosure with the ice making assembly in the "home" position;
Fig. 17B is an elevated end view of the ice making assembly of the present disclosure with the ice making assembly in a first oscillation position moving counterclockwise;
Fig. 17C is an elevated end view of the ice making assembly of the present disclosure with the ice making assembly in another oscillation position moving clockwise;
Fig. 17D is an elevated end view of the ice making assembly of the present disclosure with the ice making assembly in an ice releasing and dispensing position that is typically at least about 160 degree rotation about the rotational axis of the ice making assembly and where the fins enter a volume of air spaced below the cover that may be heated by the heater;
Fig. 18A is a schematic bottom view of the ice making assembly according to an aspect of the present disclosure where the defrost water water channels convey defrost water melted off the metal ice fins of the assembly to the distal end of the ice piece forming tray;
Fig. 18B is a schematic bottom view of the ice making assembly according to an aspect of the present disclosure where the defrost water water channels convey defrost water to an alternative corner of the ice making assembly at the distal end of the ice piece forming tray;
Fig. 18C is a schematic bottom view of an ice making assembly according to an aspect of the present disclosure wherein the defrost water water channels convey defrost water melted off the metal ice fins of the assembly to the motor engaging end of the ice piece forming tray;
Fig. 19 is a cross-sectional view of the ice making portion taken along line XIX-XIX in Fig. 20 according to an aspect of the present disclosure;
Fig. 20 is a perspective view of the ice try according to an aspect of the present disclosure;
Fig. 21 shows an isometric view of a heat sink of an embodiment; and
Fig. 22 is a cross-sectional view taken along line XXII-XXII in Fig. 21.

### DETAILED DESCRIPTION

Before further description, it is to be understood that the disclosure is not limited to the particular embodiments of the disclosure described below, as variations of the particular embodiments may be made and still fall within the scope of the appended claims. It is also to be understood that the terminology employed is for the purpose of describing particular embodiments, and is not intended to be limiting in any manner. Instead, the scope of the present invention will be established by the appended claims.

Where a range of values is provided, it is understood that each intervening value, to the tenth of the unit of the lower limit unless the context clearly dictates otherwise, between the upper and lower limit of that range, and any other stated or intervening value in that stated range, is encompassed within the invention. The upper and lower limits of these smaller ranges may independently be included in the smaller ranges, and are also encompassed within the invention, subject to any specifically excluded limit in the stated range. Where the stated range includes one or both of the limits, ranges excluding either or both of those included limits are also included in the invention.

In this specification and the appended claims, the singular forms "a," "an" and "the" include plural reference unless the context clearly dictates otherwise.

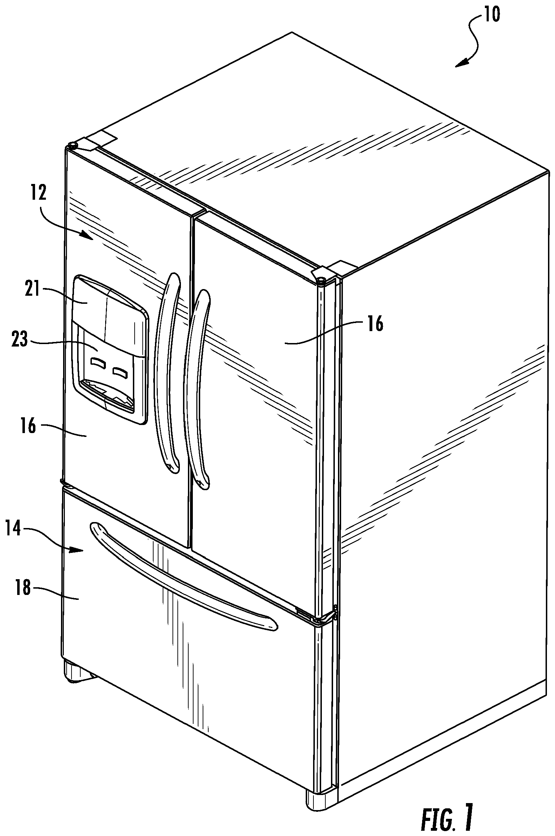

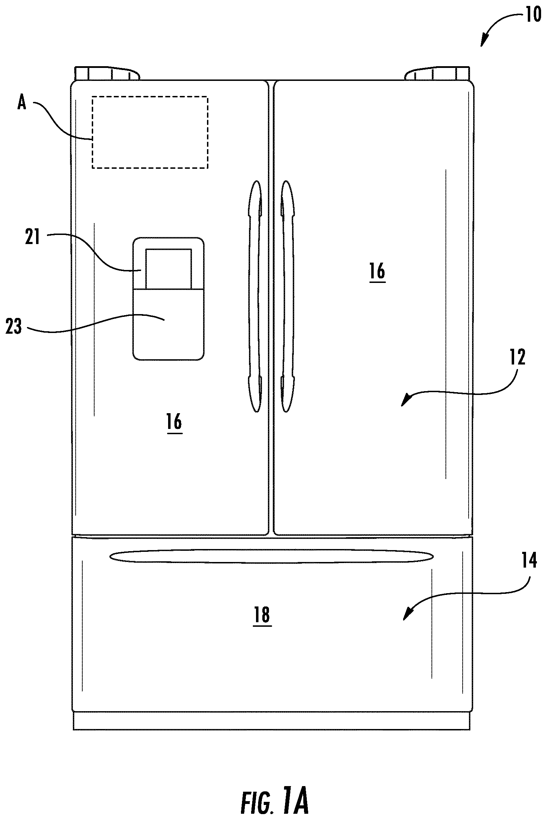

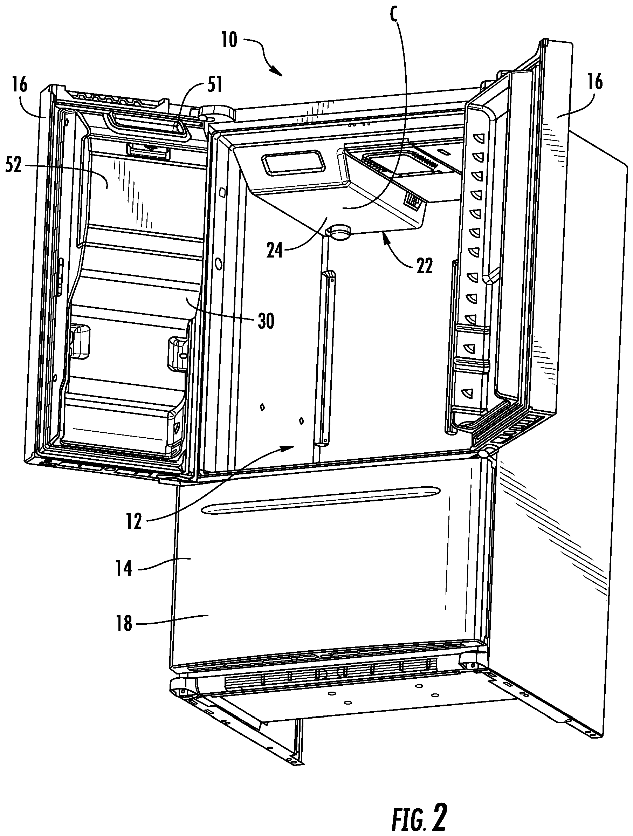

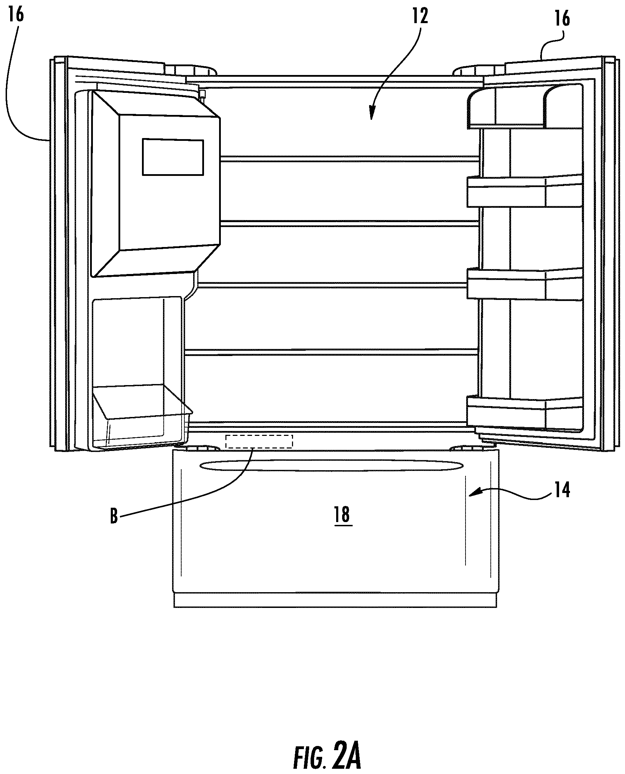

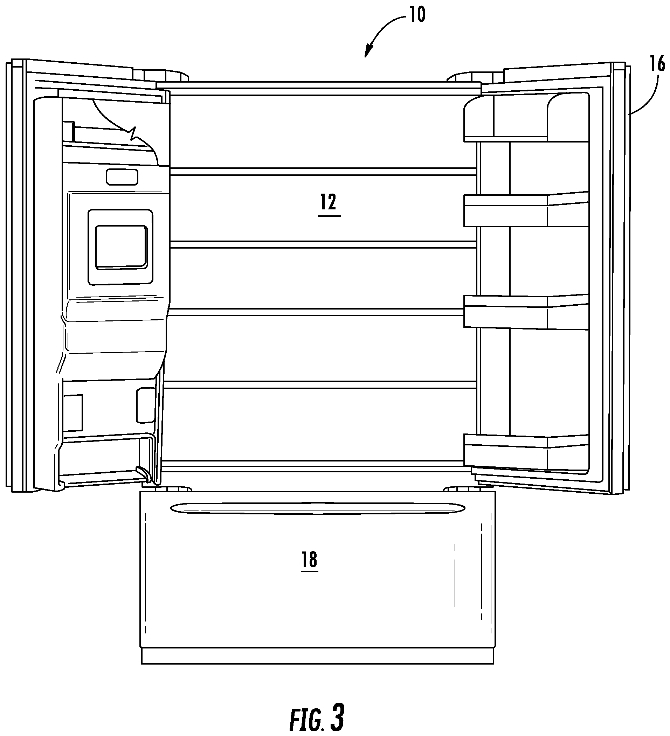

The present disclosure is generally directed to an ice making assembly with a twist ice tray, metal heat sink with heat sink fins and directional cooling due to the use of a canopy and heater. The system also allows for the defrosting of frost that may build up on the heat sink fins and transports the defrost water through defrost water water channels associated with the ice making assembly. A standard French door bottom mount refrigerator (10) is shown in Figures 1-3. The refrigerator (10) typically includes a refrigeration compartment (12) with operating temperatures above freezing and at least one freezer compartment (14) with operating temperatures at or below freezing during normal operation. While a French door bottom mount refrigerator is shown, the refrigerator appliance could be a side by side configuration, a top mount freezer or have one or more pantry drawers. Any configuration of the appliance may incorporate the ice making assemblies of the present disclosure. In fact, the ice making assembly could conceivably be used in connection with a dedicated ice making appliance and not necessarily refrigerator that has the capability to store and preserve food. Typically, the refrigerator compartment (12) of the appliance is enclosed by one or more refrigerator compartment doors (16). Typically, two doors 16 are used to enclose the refrigerator compartment of a French door bottom mount refrigerator and one freezer compartment door (18) for the freezer compartment of the appliance. A water and ice dispenser (21), which often includes a recessed dispensing well (23), is located on one of the doors (14) of the appliance (10). The dispenser (21) dispenses water, typically filtered water, and ice produced by the ice making assembly (100). The ice making assembly (100) can be located in a variety of locations including, within the door (generally location A in Fig. 1A, for example), above the appliance, and within the top mullion of the appliance. If ice is produced for storage within the freezer compartment behind the refrigerator compartment door (16), the ice making assembly can be positioned within the ice making compartment or within the mullion between the refrigerator compartment and the freezer compartment as generally shown by location B in Fig. 2A, for example. An additional possible location for the ice making assembly is shown by location C in Figure 2 which is in/proximate the top mullion.

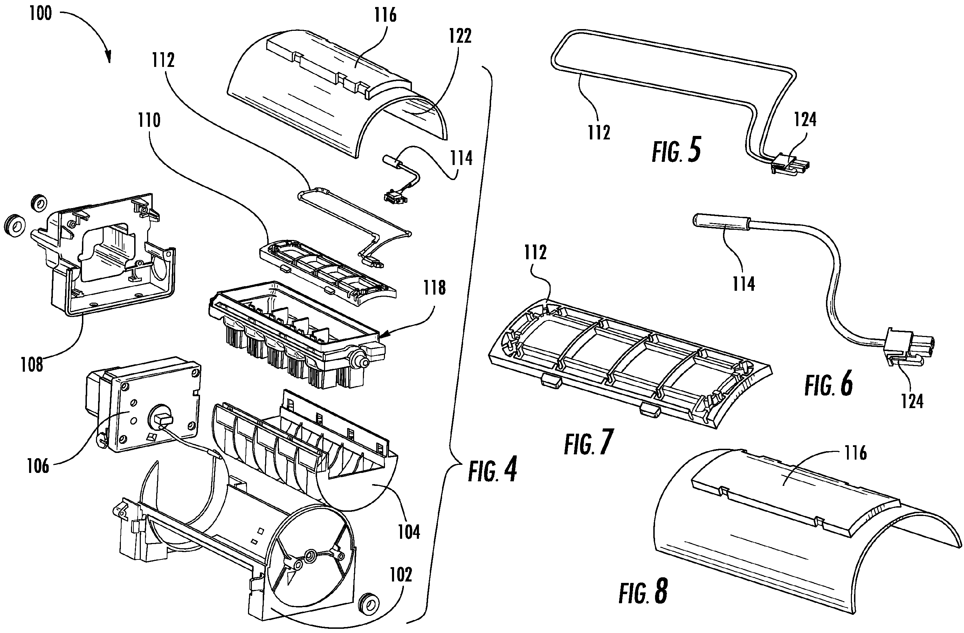

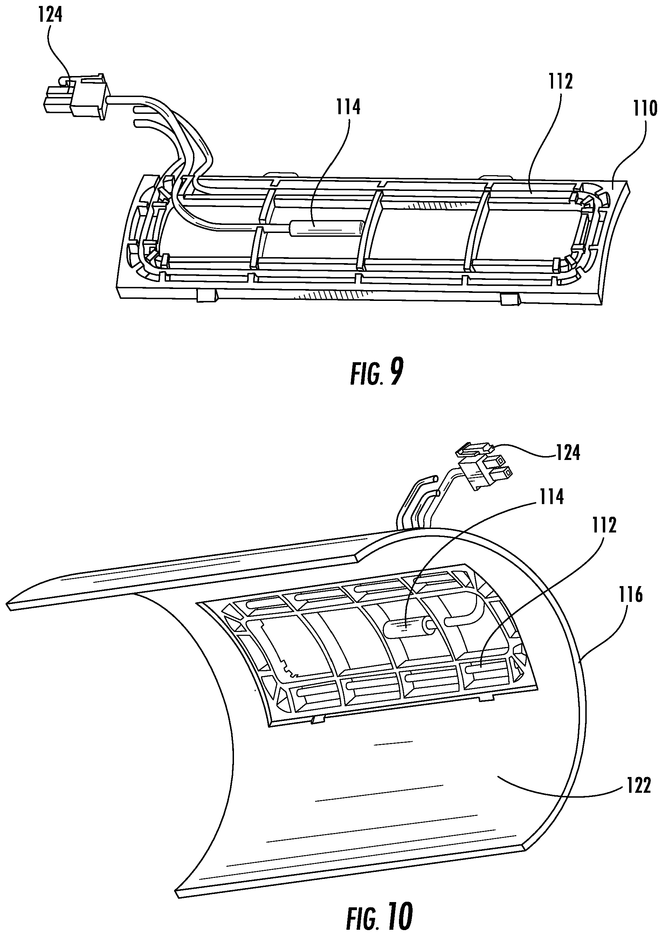

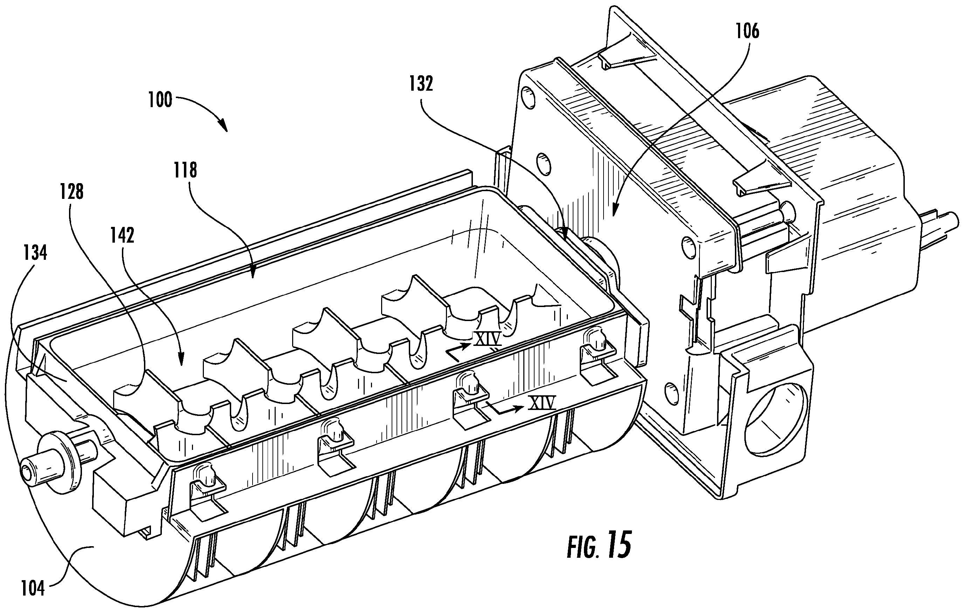

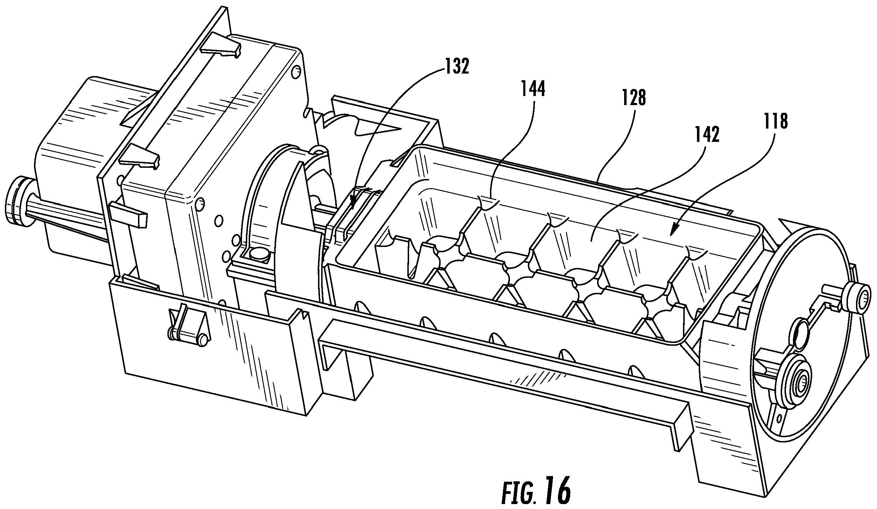

An exploded view of the ice making assembly (100) according to an aspect of the present disclosure is shown in Fig. 4. As shown in Figures 4-16, the ice making assembly (100) includes a base frame (102), a channel forming frame (104), a motor assembly section (106), a motor bracket (108), a heater bracket (110) that engages and holds the heater (112), a heater thermistor (114), and a bracket/frame cover or canopy (116). The overall ice making assembly (100) also typically includes an ice making portion (118), which is generally shown in Figures 5, (12), (15), and (16). The motor assembly section (106) engages a motor end (132) of the ice making portion in an engaged manner sufficient to rotate the ice making portion (118) at least in the manner discussed herein. As shown in Figure 9, the heater (112) is typically engaged and either press fit into the heater bracket or engaged and affixed into engagement with the heater bracket using one or a plurality of fasteners. The heater bracket (110) is a support structure for the heater (112). The bracket (110) and heater (112) can be reparable components engaged with one another as discussed above, but may also be formed into one part with injection molding. The heater bracket (110) and heater (112) are typically engaged to the concave, interior-facing surface (122) of the bracket/frame cover (116) (see Fig. 10). The bracket (116) typically has an arcuate-shaped cross-section along its length. The ice piece forming tray cover has a portion of a cylinder shape with the open side facing toward the ice piece forming tray. The heater is positioned on an ice piece forming tray facing side of the ice piece forming tray cover. The cover (116) is spaced a distance above the ice piece forming tray (128). When assembled, the cover (116) includes a heater and a temperature sensor and typically the heater and thermistor are engaged with the heater bracket. The channel forming frame has downwardly extending and generally semicircular air flow channel defining fins that form airflow channels under the ice piece compartments between the first side and the second side of the ice piece forming tray. The fins from the heat sinks are typically at least approximately parallel or parallel to the airflow channel defining fins of the channel forming frame. The channel forming frame may also have a bottom cover portion (120) under the fins to keep air from traveling downward and direct. The motor assembly section (106) engages the motor bracket, which itself engages a surface, which is typically an interior surface, of the appliance (10).

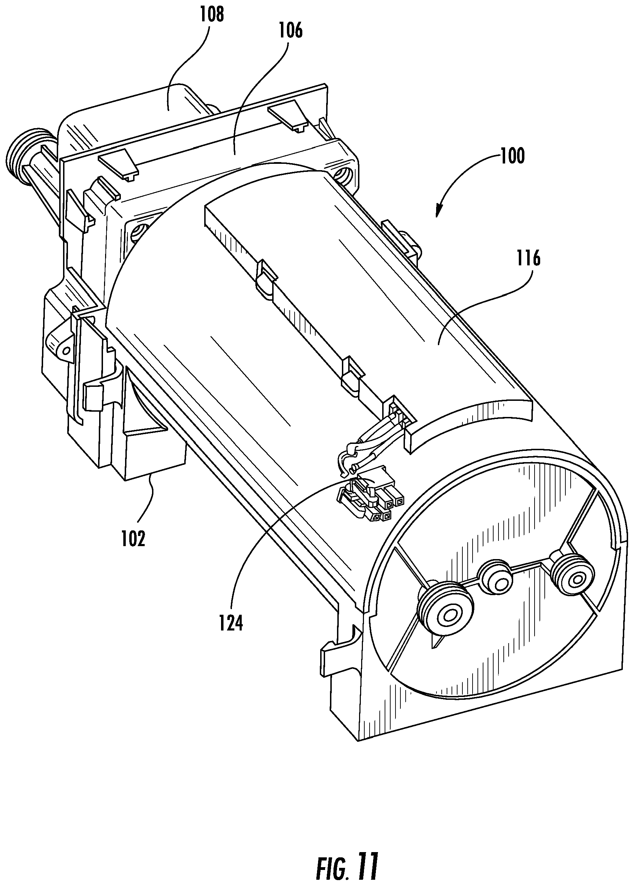

The completed assembly is shown in Figure 11. The electrical/signal connectors (124) are exposed on the outside of the frame cover, which operates somewhat like a canopy over the ice tray. The electrical/signal connectors (124) are then typically snapped into electrical and signal engagement with the overall appliance. This modular system allows for easy engagement and removal of the completed assembly for replacement and repair of the assembly if necessary.

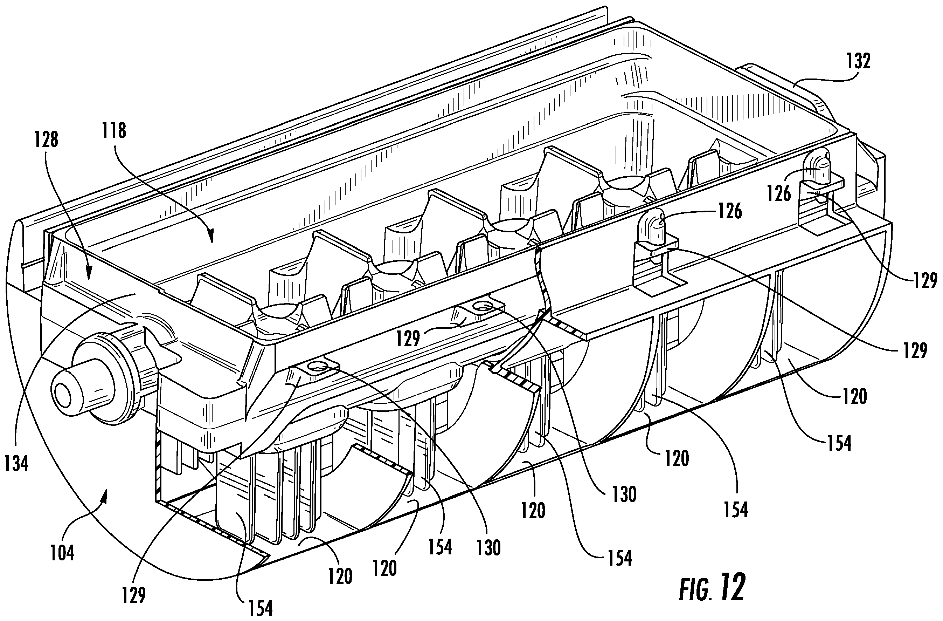

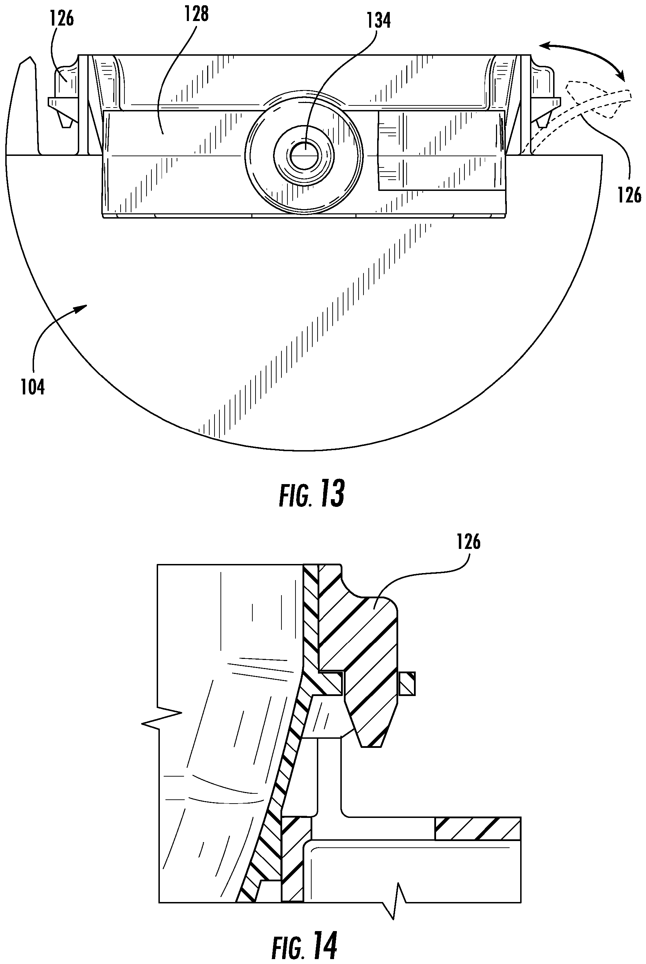

The ice making portion and the channel forming frame are shown in Figures 12-14. The channel forming frame (104) is typically constructed from an elastomeric material. The elastomeric material is typically a thermoplastic elastomer such as a polypropylene or a SANTOPRENE® from Exxon Mobil Corporation, which is a thermoplastic vulcanized rubber that will remain flexible under freezing conditions. The channel forming frame will typically remain flexible under freezing conditions for extended periods of time up to and including the entire lifetime of the ice making assembly. As shown in the dashed portion of Fig. 13, the engagement tabs (126) of the channel forming frame bend away from the ice tray (128) to engage the channel forming frame (104) into engagement with the ice tray (128). The material is flexible enough to be bent away during installation, but has memory to return back or the same substantially the same unbiased and natural position. The cross-section of the engagement tab is shown in Figure 14 in the engaged position. The engagement tabs (126) engage tab receiving apertures (130) on the ice tray (128) and retain the channel forming frame in engagement with the ice tray. The tab receiving apertures are present in a plurality of outwardly extending projections (129) (see Fig. 12).

The ice making portion (118) typically includes an ice piece forming tray (128), which is typically a polypropylene copolymer, having a motor engaging end 132, a distal end 134, a first side, a second side and a bottom surface. The ice making assembly portion also further typically includes a plurality of ice piece making compartments (142) divided by divider walls (weirs) (144) and heat sinks. The divider walls (144) typically have cutout sections on each end that abuts the first side and the second side of the ice piece forming tray to allow water to spill over into joining ice piece forming compartments. Similarly, cutouts are formed along the elongated longitudinal divider walls that may be present in the ice making tray (there can be more than one, but typically the tray is divided into two rows of ice compartments separated by a divider wall (144) along or parallel to an axis of rotation (148) of the ice piece forming tray (128). The divider wall (144) also typically has cutouts between each of the adjoining two ice piece forming compartments.

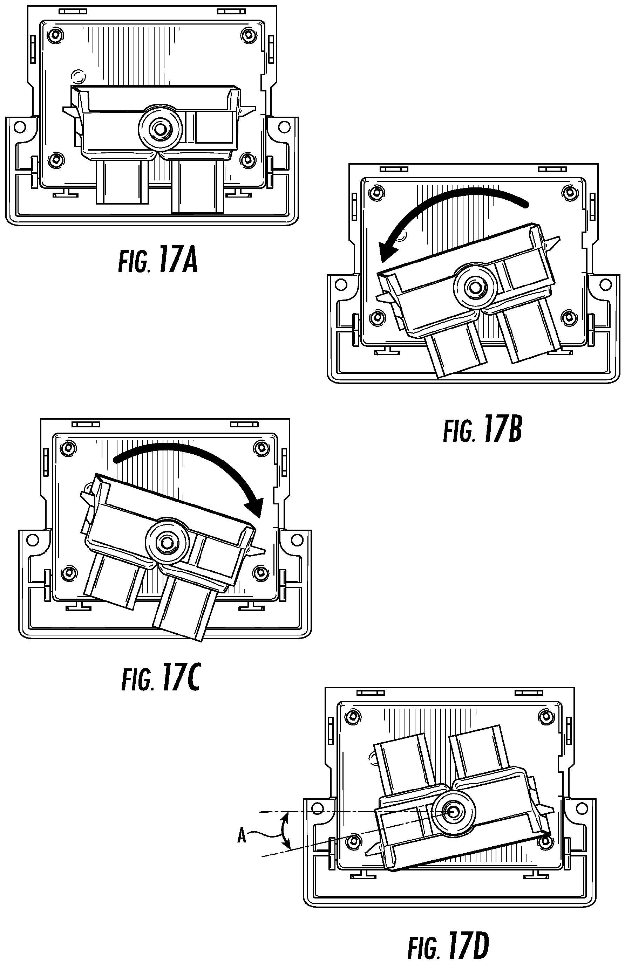

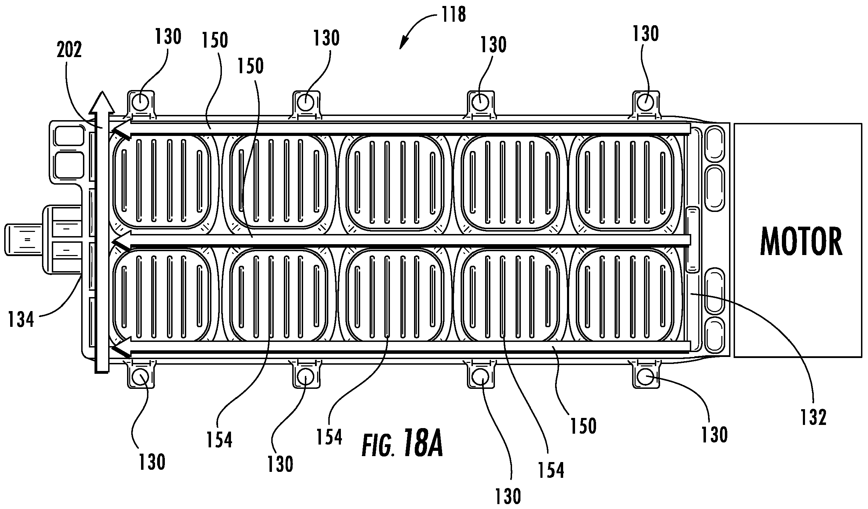

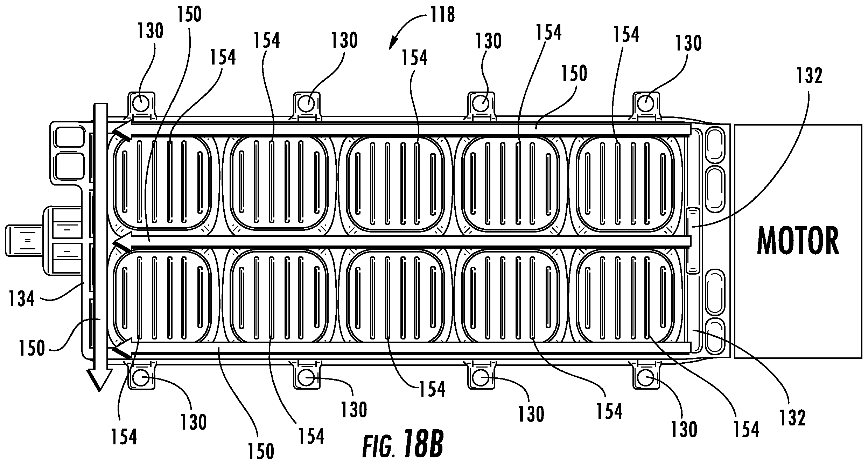

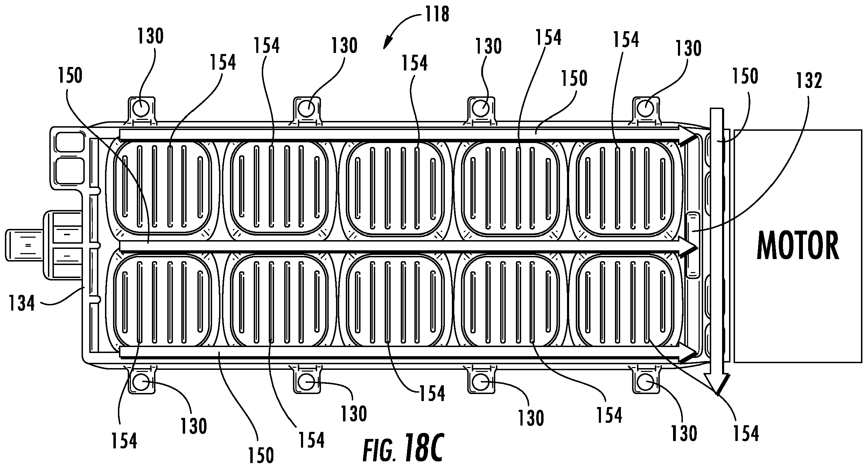

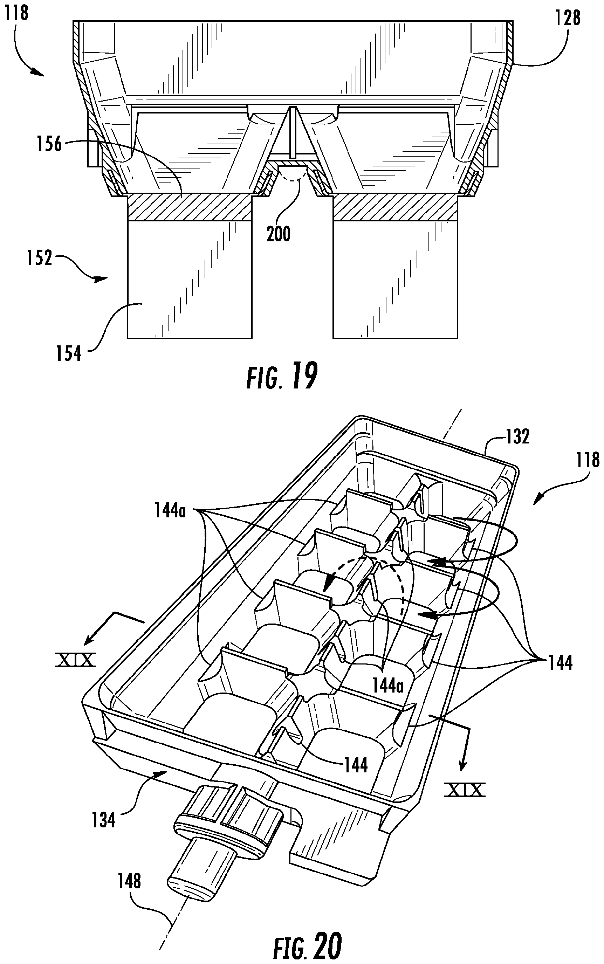

The ice making assembly also typically includes a plurality of defrost water water channels (150) positioned at least substantially parallel to or along the axis of rotation (148) of the ice piece forming tray (128) and along at least one of the motor engaging end (132) and the distal end (134). The plurality of defrost water water channels (150) that engage one another in fluid communication with one another and each configured to receive defrost water from a plurality of heat sinks (152) engaged to the bottom surface of the ice making compartments and deliver defrost water to a drain or defrost water catch tray (not shown) positioned at at least one of the distal end and the motor engaging end. Typically this defrost water catch tray would be located at the distal end beneath the area of rotation of the ice making portion. It may be a small catch tray having side walls. The defrost water in the tray would then drain to the evaporator drip tray, which would typically be positioned remote from the ice maker. The water would be deliver to the evaporator drip tray for evaporation via hosing connected to an outlet of the defrost water catch tray and in liquid communication with the evaporator drip tray located remotely from the ice making assembly. The channels would typically have a generally U-shaped cross section and would typically have a radius (200) (see central channel shown in Fig. 19) sufficient to allow for proper plastic formation of the ice piece forming tray (128) and prevent stress concentration during ice piece harvesting. The currently preferred drip point (202) is at the corner of the ice making portion (118). When the drip point (202) is located in this position, the ice making portion (118) is positioned as shown in Fig. 17D before the tray flexes for ice cube release. Figure 17D shows the ice making portion at an angle A preferred for defrosting the fins, which is the angle that the drip point is from a completely inverted position of ice making portion (118). This angle A is typically approximately from about 135 to about 140 degrees from an inverted position of ice making portion (118). This position for defrost prevents the tray from being flexed while the water runs off the tray and increases tray life. Based upon the drip point in the location shown in Fig. 17D, the defrost water water channels (150) are typically designed such that the middle channel (see Figure 18A) will collect from the fins associated with the right side ice piece forming compartments and the left channel of Fig. 18A will collect defrost water from the fins associated with the left side ice piece forming compartments. The left channel of Fig. 18A will also collect defrost water runoff from the center channel. The tray design may be symmetrical as shown in the Figures, which allows for flexibility in harvesting direction and facilitates inclusion in multiple refrigerator appliance configurations as discussed above. It also facilitates different installation options and methods.

The heat sinks (152) of the typically have downwardly extending fins (154) that extend away from the bottom surface of the ice piece making compartments (142) and are typically made of metal and engaged with the bottom surface of the individual ice piece forming compartments of the ice tray (128). The ice piece forming tray itself is typically a thermoplastic material that is twistable to release the ice pieces formed within the ice piece forming tray. The downwardly extending fins (154) are typically spaced apart metal planar components that allow airflow laterally between the fins (154).

In order to warm the air blowing over the top of the ice tray (128) during ice piece formation and over the heat sink fins during harvesting, a heater (112) may be employed. The heater (112) may be an electric resistance heater or any other type of heater known in the art. The heater (112) may be disposed on a heater bracket (110), which houses the heater (112) as well as a thermistor (114). The heater, thermistor, and heater bracket are all engaged by a bracket cover (116) (see Fig. 10). The heater and the thermistor are in electrical communication with a controller (not shown) of the appliance. During ice formation, the thermistor senses the temperature of the air being blown over the top of the ice tray (128).

To create the ideal state for directional freezing the cold (below -0,5°C) freezer air is directed across the bottom of the tray. The top of the tray will need to be above freezing (>0°C). To accomplish this an active control is required to maintain the temperature. Too high of a temperature and the ice rate and energy are negatively impacted, too low temperature does not allow for directional cooling. The temperature is preferably from about 2,8°C to about 6,1°C. To maintain this temperature range the heater (112) is used with a feedback temperature sensor or thermistor (114) to allow for heater control and temperature monitoring. The heater (112) is incorporated into a cover (116) over the ice tray (128) isolating the top of the ice tray from the surrounding air allowing the icemaker to be stored in a freezing environment. The temperature sensor (114) signals the control to turn on the heater if temperature drops below a minimum set point and then off as it rises above the maximum set point.

In another embodiment, heat may be added via the use of the following: an air duct, damper, fan, and temperature sensor (114). This will again be a closed loop temperature controlled system, but instead of using an electric heater (112) it will use a damper and fan to direct air to the top of the tray (128). The air supplied from within the refrigerated compartment or similar area that is maintained above the freezing point of water. The damper will open if temperature drops below the threshold and close as it approaches the upper temperature limit.

In another embodiment, waste heat from the electric motor spaced within the motor assembly section (106) may be used. The motor drives the ice tray during the freezing process. The motor will need to generate enough waste heat to maintain this temperature and use a fan that directs the waste heat above the ice tray with a temperature sensor or thermistor (114) controlling the fan operation based on minimum and maximum allowed temperatures.

This directional freezing produces clear ice, as the impurities and air pockets within the cube are forced to the top of the ice cube, as opposed to being forced toward the middle of the ice cube in a typical ice tray.

A seed fill may be used in the ice making process. A seed fill is a small portion of the overall ice tray water capacity introduced into the ice tray, before the ice tray (128) is filled in earnest. This seed fill prevents a filled-to-capacity ice tray from super cooling and preventing directional freezing.

In a typical ice tray (128) there are weirs (144) between the sets of ice making compartments (142). These weirs (144) distribute water between the ice making compartments (142) such that the amount of water in each ice making compartment (142) is relatively even. These weirs (144) are typically not very deep, as deep weirs add to the structural rigidity of the ice tray (128), making removal of the ice from the ice tray (128) more difficult, because it takes more force to twist the ice tray (128) to remove the ice cubes from the ice tray (128). This also prevents an icemaker with a single fill tube from distributing a seed fill into the ice tray without the use of multiple fill tubes.

By adding extra weirs (144a) at the end of the ice making compartments, water is allowed to flow more freely between the rows of ice making compartments as opposed to just across the columns of ice making compartments (144). As described herein the rows of ice making compartments are defined as those ice making compartments normal to the axis of rotation, and the columns are the ice making compartments along the axis of rotation. These weirs between the rows of ice cavities may be closer to the ice tray perimeter, to allow the water to flow more freely as it is rocked back and forth. These deeper weirs (144) allow a lower amount of seed fill water to be introduced to the ice tray (128) and allow the seed fill to travel between the ice making compartments in a generally even fashion. This configuration allows a seed fill of about 20% of the total capacity of the ice tray, whereas without this configuration a seed fill of less than about 50% may not be able to traverse between ice making compartments to provide an even fill across the ice making compartments 42.

During the seed fill, the tray (128) may be oscillated at a specific angle and frequency. A motor may be operably coupled with the ice tray (128) at one end of the ice tray (128). The motor may be in electrical communication with a control (not shown) which may be a microprocessor or a microcontroller, or any other controlling device known in the art for controlling a system and/or processing signals and providing instructions based upon the signals/input received. The angle and frequency is determined by the water movement within the specific tray (128) for efficient transfer of water from side to side to promote the successful distribution of the seed fill of water as the water freezes. It is also based on the fill volume to prevent water from spilling over the sides of the ice tray (128). After the seed fill occurs, a main fill process will occur. The main fill process will include the addition of a volume of water sufficient to produce final ice pieces within each of the ice piece forming compartments and thereafter, the tray (128) is oscillated at a specific angle and frequency to produce clear ice. The angle and frequency may be adjusted, but will be such as to avoid water washing out of the ice piece forming compartments/prevent spillage. The angle and frequency are adjusted based on fill volume to allow successful washing during freeze process and fill volume to prevent water spillage. This rotation aids in allowing impurities within the water to escape and the water to freeze more clearly, typically such that clear ice forms, which is ice that is clear to the naked eye.

The tray may be rotated to an angle of 30-50 degrees, more preferably about 40 degrees clockwise and counterclockwise, in any event not as far as to engage the stop 32. As the tray is rotated clockwise and counterclockwise, the tray may be held for 2-5 seconds to allow the water migration from cube to cube, more preferably about 3 seconds. This rocking motion and method is capable of distributing about 20 cubic centimeters of water across the ten cubes as shown in the tray (128) substantially evenly, or about 2 cubic centimeters per ice cube, with total ice cube volume of about 10 cubic centimeters each. This rotation facilitates even disbursement of the fill water within the ice mold (128) prior to freezing.

Figs. 12 and 19 generally show the addition of heat sinks (152) to the bottom of the ice making compartments (142). The heat sink (152) may be comprised of one or more heat sinks fins (154). These heat sinks fins (154) allow more efficient heat carrying capabilities to remove the heat from the water in the ice making compartment (142) into the air flow below the ice making compartments that passes around and between the heat sink fins (154). The fins (154) have a thickness and have a pair of substantially parallel planar surfaces that extend in a generally downward direction from the bottom of the heat sink base (156).

Figs. 12 and 19 generally show the ice tray (128) with the heat sinks (152) below each ice making compartment (142). Fig. 12 shows the heat sink 60 further include a heat sink base 64 which attaches to or is otherwise engaged with the bottom side of the ice making compartments (142). The thickness of the heat sink base (156) may be anywhere from 0.7 millimeters to 4.8 millimeters, preferably 0.7 millimeters. The lower the thickness of the heat sink base 64 allows for greater flexibility of the ice tray (128) during the harvesting process.

The heat sinks may be integrated into the ice tray (128) by over-molding the heat sinks within a plastic ice tray mold. The heat sinks (152) may be placed into a plastic injection mold machine (not shown) and located within the mold. A plastic material in liquid form is then injected around the heat sinks (152) and allowed to cool. This process integrates the heat sinks (152) and the plastic portion of the ice tray (128) as if they were a single part. The heat sink base (156) may mate with the bottom of the ice making compartments (142), or the heat sink base may be used as the bottom of the ice making compartments (142). In this case, no plastic is injected over the top portion of the heat sink base (156), which allows for more efficient heat exchange between the heat sink (152) and the water within the ice tray (128).

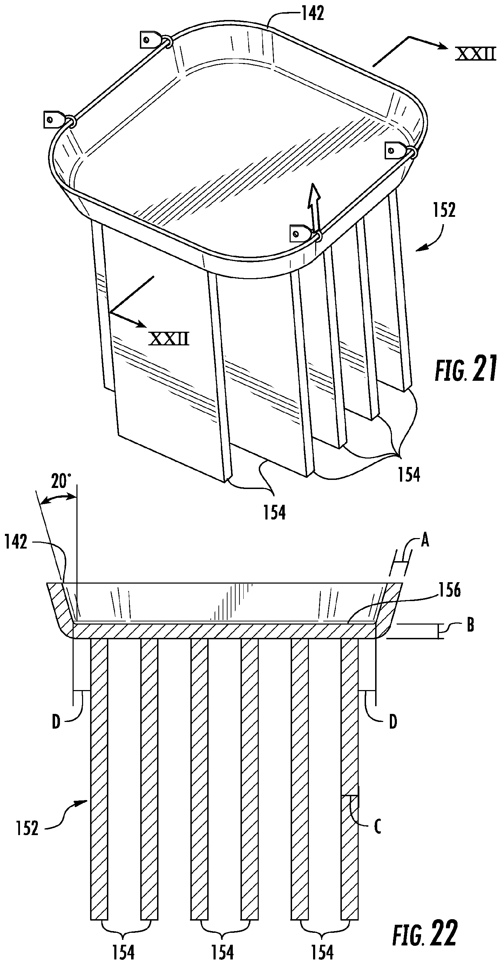

Fig. 22 is a cross section view through a center portion of the ice tray (128) with the heat sinks (152) attached. The heat sink base (156) thickness is generally denoted by dimension A and is 0.7 to 4.8 millimeters, preferably 0.7 millimeters. Dimension B is a top surface of the heat sink base (156) which is generally 15.6 by 17.2 millimeters. The heat sink base (156) may also have a side wall (158) that generally conforms to the bottom of the side walls of the ice making compartments. Dimension C is the side wall angle of the heat sink base (156) and is generally 19 degrees to 26 degrees, preferably about 20 degrees. The ice making compartment (142) with the heat sink attached may include two cupped walls, instead of walls around all four sides of the bottom surface of the ice making compartment(s) to allow for a better flexing of the ice tray (128).

To harvest the ice within the ice tray (128) after the water has frozen into ice cubes, the tray (128) is rotated about 150-170 degrees, preferably about 160 degrees, such that the distal end of the ice tray (128) from the motor abuts a stop. The motor then continues to rotate the tray about another 30 to 50 degrees, preferably about 40 degrees, typically imparting about a 40 degree twist in the tray. The twist action causes the ice cubes to release from the tray and from each other, and allows them to fall out due to the force of gravity. This saves energy and is more efficient than an ice tray that employs a separate heater or thermoelectric to cause a melt portion of the ice cube to release it from the tray (128). The ice pieces formed in the ice tray are typically at least substantially free, but more typically free of occlusions of captured air visible to the naked eye.

The use of metal heat sinks as described above have a significant drawback to their use. In particular, the metal may have frost build up over time. Accordingly, not only does the heater (112) provide for improved directional freezing during the freezing process, but the heater may be activated to a heating mode when the ice harvesting is occurring to both loosen the ice cubes within the ice forming compartments and, significantly, to melt frost that may have formed on the metal heat sinks and/or heat sink fins to form defrost water that is then received into channels and directed through one or more channels to an outlet or evaporation location. Typically, the outlet or evaporation location will be on the distal end of the ice making portion, but could also be at the motor end of the ice making portion as shown in Figures 18A-C. Accordingly, the present disclosure also contemplates a method of defrosting frost from the heat sinks overall and the heat sink fins in particular that are on the bottom surface and extending downward from the bottom surface of an ice tray by rotating the tray to both release the ice pieces formed in the tray and to defrost the fins by bringing the frost covered fins into closer proximity to the heater in the canopy and into a space having a temperature above freezing.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the invention as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the scope of the present claims.

It will be understood that any described processes or steps within described processes may be combined with other disclosed processes or steps to form structures within the scope of the present innovation. The exemplary structures and processes disclosed herein are for illustrative purposes and are not to be construed as limiting.

## Claims

1. An ice making assembly (100) comprising:
an ice piece forming tray (128) having a motor engaging end (132), a distal end (134), a first side, a second side and a bottom surface and a plurality of ice piece making compartments (142) divided by divider walls (144); and a plurality of defrost water water channels (150); and
wherein at least one defrost water water channel (150) is positioned at least substantially parallel to or along an axis of rotation (148) of the ice piece forming tray (128) and at least one defrost water water channel (150) is positioned along at least one of the motor engaging end (132) and the distal end (134); and
wherein the plurality of defrost water water channels (150) engage one another in fluid communication with one another and the plurality of defrost water water channels (150) are each configured to receive defrost water from a plurality of heat sinks (152) engaged to the bottom surface of the plurality of ice piece making compartments (142),
wherein the heat sinks (152) have downwardly extending fins (154) that extend away from the bottom surface of the plurality of ice piece making compartments (142),
the ice making assembly further comprising an ice piece forming tray cover (116) spaced a distance above the ice piece forming tray (128), wherein the ice piece forming tray cover (116) comprises a heater (112) and a temperature sensor (114),
and wherein a drain or defrost water catch tray is positioned at at least one of the distal end (134) and the motor engaging end (132), the water channels (150) delivering defrost water to said drain or catch tray.

2. The ice making assembly (100) of claim 1, wherein the ice piece forming tray cover (116) has an arcuate-shaped cross-section along is length.

3. The ice making assembly (100) of claim 2, wherein the ice piece forming tray cover (116) has a portion of a cylinder shape with an open side facing toward the ice piece forming tray (128) and wherein the heater (112) is positioned on an ice piece forming tray (128) facing side of the ice piece forming tray cover (116).

4. The ice making assembly (100) of claim 3 wherein the temperature sensor (114) is associated with the ice piece forming tray cover (116) and configured to sense a temperature of air retained under the ice piece forming tray (128) facing side of the ice piece forming tray cover (116) and, in conjunction with the heater (112), maintain the temperature of air retained under the ice piece forming tray cover (116) at a temperature above freezing thereby allowing the ice making assembly (100) to form at least substantially clear ice pieces within the ice piece making compartments (142).

5. The ice making assembly (100) of claim 4, wherein the ice piece forming tray (128) is made of a plastic and the heat sinks (152) and fins (154) are a metal and wherein the portion (118) of the cylinder shape is an about half of a cylinder shape.

6. The ice making assembly (100) of claim 5, wherein the ice piece forming tray (128) is sufficiently flexible to release ice pieces from the ice piece making compartments (142) of the ice piece forming tray (128) when inverted and twisted.

7. The ice making assembly (100) of claim 1 wherein the temperature sensor (114) associated with the ice piece forming tray cover (116) is configured to sense a temperature of air retained under the ice piece forming tray (128) facing side of the ice piece forming tray cover (116) and further comprising an oscillating motor engaged to at least the motor engaging end (132) of the ice piece forming tray (128) configured to rotate the ice piece forming tray (128) back and forth while the ice pieces are being formed and also at least about 160 degrees from a home level position, where the ice piece making compartments (142) face upward, to an inverted, ice pieces liberating position where the ice piece forming tray (128) is twisted and the ice pieces liberated from the ice piece making compartments (142) and dispensed.

8. The ice making assembly (100) of claim 1, wherein the fins (154) of the the heat sinks (152) form airflow channels under the ice piece making compartments (142) between the first side and the second side of the ice piece forming tray (128).

9. A method of making ice pieces comprising the steps of:
providing an ice making assembly (100) comprising:
a motor;
an ice piece forming tray (128) having a motor engaging end (132), a distal end (134), a first side, a second side and a bottom surface; and a plurality of ice piece making compartments (142) divided by divider walls (144);
a plurality of metal heat sinks (152) engaged to the bottom surface of the ice piece making compartments (142), wherein the heat sinks (152) have a plurality of downwardly extending and spaced apart metal fins (154) that extend away from the bottom surface of each ice piece making compartment (142);
at least one defrost water water channel (150) wherein the at least one defrost water water channel (150) is positioned at least substantially parallel to or along an axis of rotation (148) of the ice piece forming tray (128) and along at least one of the motor engaging end (132) and the distal end (134) wherein each defrost water water channels (150) engage one another and are in fluid communication with one another;
placing an ice piece forming tray cover (116) at a spaced distance above and covering the ice piece forming tray (128) wherein the ice piece forming tray cover (116) includes a heater (112) and a temperature sensor (114);
filling at least one of the ice piece making compartments (142) with an amount of water;
oscillating the ice piece forming tray (128);
using the temperature sensor (114) and the heater (112) to maintain an air temperature above the ice piece making compartments (142) above freezing during at least a portion (118) of time for forming the ice pieces;
moving air below 0 degress Celsius through spaces between the plurality of downwardly extending spaced apart metal fins (154);
forming one or more ice pieces within the ice piece making compartments (142) previously filled with water directionally with freezing starting from a portion (118) of the ice piece making compartments (142) distal from the ice piece forming tray cover (116) and proximate the heat sink (152) and toward a top of the ice piece making compartments (142);
rotating the ice piece forming tray (128) with one or more formed ice pieces spaced within the one or more ice piece making compartments (142) that were filled with water to invert the ice piece forming tray (128) until the ice piece forming tray (128) is rotated at least about 160 degrees from its level, flat, and ice piece making compartment (142) upwardly facing position; and
twisting the ice piece forming tray (128) to release the ice pieces within the ice piece forming tray (128); and
wherein the step of rotating the ice piece forming tray (128) comprises moving the plurality of downwardly extending spaced apart metal fins (154) into closer proximity to the canopy (116) and into a volume of air proximate the ice piece forming tray cover (116) that has a temperature above freezing due to heat applied to the volume of air proximate the ice piece forming tray cover (116) from the heater
(112) such that frost on the plurality of downwardly extending spaced apart metal fins (154) melts and enters at least one defrost water water channel (150);
delivering the defrost water with the plurality of defrost water water channels (150) to a drain or a defrost water catch tray positioned at at least one of the distal end (134) and the motor engaging end (132).

10. The method of claim 9, wherein the ice pieces are at least substantially free of air occlusions that are visible by the naked eye,
wherein the step of twisting the ice piece forming tray (128) to release the ice pieces within the ice piece forming tray (128) includes twisting the ice piece forming tray (128) by rotating the ice piece forming tray (128) such that a distal end (134) of the ice piece forming tray (128) engages an ice tray stop (32) at a distal end (134) corner of the ice piece forming tray (128) to twist the ice piece forming tray (128) about its axis of rotation (148) and release the one or more ice pieces;
wherein the step of oscillating the ice piece forming tray (128) includes oscillating the ice piece forming tray (128) back and forth such that water spills over the divider walls (144) between the ice piece making compartments (142) and not out of the ice piece forming tray (128) and wherein the ice piece forming tray (128) canopy (116) has an arcuate-shaped cross-section along substantially all of its length; and
wherein the heater (112) is positioned on an ice piece forming tray (128) facing side of the ice piece forming tray cover (116) and wherein the temperature sensor (114) senses the temperature of the volume of air proximate the ice piece forming tray **cover** (116) and is operably connected with a controller that controls the heater (112) to maintain the temperature of the volume of air proximate the ice piece forming tray canopy (116) at a temperature above freezing.

## Patentansprüche

1. Eisherstellungsanordnung (100), umfassend:
eine Eisstück-Bildungsschale (128), die ein Motoreingriffsende (132), ein distales Ende (134), eine erste Seite, eine zweite Seite und eine Bodenfläche und eine Vielzahl von Eisstück-Herstellungsfächern (142), die durch Trennwände (144) unterteilt sind; und eine Vielzahl von Tauwasser-Wasserkanälen (150); und
wobei mindestens ein Tauwasser-Wasserkanal (150) mindestens im Wesentlichen parallel oder entlang einer Drehachse (148) der Eisstück-Bildungsschale (128) und mindestens ein Tauwasser-Wasserkanal (150) entlang mindestens eines des Motoreingriffsendes (132) und des distalen Endes (134) positioniert ist; und
wobei die Vielzahl von Tauwasser-Wasserkanälen (150) in Fluidverbindung miteinander in Eingriff stehen und die Vielzahl von Tauwasser-Wasserkanälen (150) jeweils konfiguriert sind, Tauwasser von einer Vielzahl von Kühlkörpern (152) aufzunehmen, die an der Bodenfläche der Vielzahl von Eisstück-Herstellungsfächern (142) angeordnet sind,
wobei die Kühlkörper (152) nach unten gerichtete Rippen (154) aufweisen, die sich von der Bodenfläche der Vielzahl von Eisstück-Herstellungsfächern (142) weg erstrecken, wobei die Eisherstellungsanordnung weiterhin eine Eisstück-Bildungsschalenabdeckung (116) umfasst, die in einem Abstand über der Eisstück-Bildungsschale (128) angeordnet ist, wobei die Eisstück-Bildungsschalenabdeckung (116) eine Heizung (112) und einen Temperatursensor (114) umfasst
und wobei eine Abfluss- oder Tauwasserauffangwanne an mindestens einem der distalen Enden (134) und dem Motoreingriffsende (132) positioniert ist, wobei die Wasserkanäle (150) Tauwasser zu der Abfluss- oder Auffangwanne liefern.

2. Eisherstellungsanordnung (100) nach Anspruch 1, wobei die Eisstück-Bildungsschalenabdeckung (116) einen bogenförmigen Querschnitt entlang ihrer Länge aufweist.

3. Eisherstellungsanordnung (100) nach Anspruch 2, wobei die Eisstück-Bildungsschalenabdeckung (116) einen Abschnitt einer Zylinderform mit einer offenen Seite aufweist, die in Richtung der Eisstück-Bildungsschale (128) gerichtet ist, und wobei die Heizung (112) auf einer Seite der Eisstück-Bildungsschalenabdeckung (116) positioniert ist, die zur Eisstück-Bildungsschale (128) zeigt.

4. Eisherstellungsanordnung (100) nach Anspruch 3, wobei der Temperatursensor (114) der Eisstück-Bildungsschalenabdeckung (116) zugeordnet und konfiguriert ist, eine Temperatur der Luft zu erfassen, die unter der Seite der Eisstück-Bildungsschalenabdeckung (116) die zur Eisstück-Bildungsschale (128) zeigt, zurückgehalten ist, und in Verbindung mit der Heizung (112) die Temperatur der unter der Eisstück-Bildungsschalenabdeckung (116) zurückgehaltenen Luft auf einer Temperatur über dem Gefrierpunkt zu halten, wodurch die Eisherstellungsanordnung (100) zumindest im Wesentlichen klare Eisstücke innerhalb der Eisstück-Herstellungsfächer (142) bilden kann.

5. Eisherstellungsanordnung (100) nach Anspruch 4, wobei die Eisstück-Bildungsschale (128) aus einem Kunststoff hergestellt ist und die Kühlkörper (152) und Rippen (154) ein Metall sind und wobei der Abschnitt (118) mit der Zylinderform etwa die Hälfte einer Zylinderform ist.

6. Eisherstellungsanordnung (100) nach Anspruch 5, wobei die Eisstück-Bildungsschale (128) ausreichend flexibel ist, um Eisstücke aus den Eisstück-Herstellungsfächern (142) der Eisstück-Bildungsschale (128) zu lösen, wenn sie umgekehrt und verdreht wird.

7. Eisherstellungsanordnung (100) nach Anspruch 1, wobei der Temperatursensor (114), der der Eisstück-Bildungsschalenabdeckung (116) zugeordnet ist, konfiguriert ist, eine Temperatur der Luft zu erfassen, die unter der Seite der Eisstück-Bildungsschalenabdeckung (116) die zur Eisstück-Bildungsschale (128) zeigt, zurückgehalten ist, und weiterhin umfassend einen oszillierenden Motor, der mit mindestens dem Motoreingriffsende (132) der Eisstück-Bildungsschale (128) in Eingriff steht, die konfiguriert ist, die Eisstück-Bildungsschale (128) hin und her zu drehen, während die Eisstücke gebildet werden, und auch mindestens etwa 160 Grad von einer Ausgangsposition, in der die Eisstück-Herstellungsfächer (142) nach oben zeigen, zu einer umgekehrten, Eisstücke lösenden Position, in der die Eisstück-Bildungsschale (128) verdreht und die Eisstücke aus den Fächern (142) gelöst und abgegeben werden.

8. Eisherstellungsanordnung (100) nach Anspruch 1, wobei die Rippen (154) der Kühlkörper (152) Luftströmungskanäle unter den Eisstück-Herstellungsfächern (142) zwischen der ersten Seite und der zweiten Seite der Eisstück-Bildungsschale (128) bilden.

9. Verfahren zur Herstellung von Eisstücken, umfassend die Schritte:
Bereitstellen einer Eisherstellungsanordnung (100), umfassend:
einen Motor;
eine Eisstück-Bildungsschale (128), das ein Motoreingriffsende (132), ein distales Ende (134), eine erste Seite, eine zweite Seite und eine Bodenfläche aufweist; und eine Vielzahl von Eisstück-Herstellungsfächern (142), die durch Trennwände (144) unterteilt sind;
eine Vielzahl von Metallkühlkörpern (152), die mit der Unterseite der Eisstück-Herstellungsfächern (142) in Eingriff stehen, wobei die Kühlkörper (152) eine Vielzahl von sich nach unten erstreckenden und voneinander beabstandeten Metallrippen (154) aufweisen, die sich von der Unterseite jedes Eisstück-Herstellungsfachs (142) weg erstrecken;
mindestens einen Tauwasser-Wasserkanal (150), wobei der mindestens eine Tauwasser-Wasserkanal (150) mindestens im Wesentlichen parallel oder entlang einer Drehachse (148) der Eisstück-Bildungsschale (128) und entlang mindestens eines des Motoreingriffsendes (132) und des distalen Endes (134) positioniert ist, wobei jeder Tauwasser-Wasserkanal (150) ineinander greift und in Fluidverbindung miteinander steht;
Platzieren einer Eisstück-Bildungsschalenabdeckung (116) in einem beabstandeten Abstand oberhalb und die Eisstück-Bildungsschale (128) abdeckend, wobei die Eisstück-Bildungsschalenabdeckung (116) eine Heizung (112) und einen Temperatursensor (114) beinhaltet;
Füllen mindestens eines der Eisstück-Herstellungsfächern (142) mit einer Wassermenge;
Oszillieren der Eisstück-Bildungsschale (128);
Verwenden des Temperatursensors (114) und der Heizung (112), um eine Lufttemperatur über den Eisstück-Herstellungsfächern (142) zumindest während mindestens eines Abschnitts (118) der Zeit zum Bilden der Eisstücke über dem Gefrierpunkt zu halten;
Bewegen von Luft unter 0 Grad Celsius durch Räume zwischen der Vielzahl von sich nach unten erstreckenden, beabstandeten Metallrippen (154);
Gerichtetes Bilden eines oder mehrerer Eisstücke innerhalb der Eisstück-Herstellungsfächer (142), die zuvor mit Wasser gefüllt waren, wobei das Einfrieren von einem Abschnitt (118) der Eisstück-Herstellungsfächer (142) distal von der Eisstück-Bildungsschalenabdeckung (116) und in der Nähe des Kühlkörpers (152) und in Richtung einer Oberseite der Eisstück-Herstellungsfächer (142) startet;
Drehen der Eisstück-Bildungsschale (128) mit einem oder mehreren gebildeten Eisstücken, die innerhalb der einen oder mehreren Eisstück-Herstellungsfächern (142) beabstandet sind, die mit Wasser gefüllt wurden, um die Eisstück-Bildungsschale (128) zu invertieren, bis die Eisstück-Bildungsschale (128) um mindestens etwa 160 Grad aus ihrer ebenen, flachen Position, in der die Eisstück-Herstellungsfächer(142) nach oben zeigen, gedreht wird;
und
Verdrehen der Eisstück-Bildungsschale (128), um die Eisstücke innerhalb der Eisstück-Bildungsschale (128) zu lösen; und
wobei der Schritt des Drehens der Eisstück-Bildungsschale (128) das Bewegen der Vielzahl von sich nach unten erstreckenden, beabstandeten Metallrippen (154) in eine engere Nähe der Haube (116) und in ein Luftvolumen in der Nähe der Eisstück-Bildungsschalenabdeckung (116) umfasst, das eine Temperatur oberhalb des Gefrierpunkts aufweist, aufgrund von Wärme, die in das Luftvolumen in der Nähe der Eisstück-Bildungsschalenabdeckung (116) von der Heizung (112) eingebracht wird, so dass Frost auf der Vielzahl von sich nach unten erstreckenden, beabstandeten Metallrippen (154) schmilzt und in mindestens einen Tauwasser-Wasserkanal (150) eintritt;
Zuführen des Tauwassers mit der Vielzahl von Tauwasser-Wasserkanälen (150) zu einem Abfluss oder einer Auffangwanne für Tauwasser, die an mindestens einem der distalen Enden (134) und dem Motoreingriffsende(132) angeordnet ist.

10. Verfahren nach Anspruch 9, wobei die Eisstücke zumindest im Wesentlichen frei von Lufteinschlüssen sind, die mit bloßem Auge sichtbar sind,
wobei der Schritt des Verdrehens der Eisstück-Bildungsschale (128), um die Eisstücke innerhalb der Eisstück-Bildungsschale (128) zu lösen, das Verdrehen der Eisstück-Bildungsschale (128) durch Verdrehen der Eisstück-Bildungsschale (128) beinhaltet, so dass ein distales Ende (134) der Eisstück-Bildungsschale (128) in einen Eisschalenanschlag (32) an einer Ecke des distalen Endes (134) der Eisstück-Bildungsschale (128) eingreift, um die Eisstück-Bildungsschale (128) um ihre Drehachse (148) zu verdrehen und die eine oder mehrere Eisstücke zu lösen;
wobei der Schritt des Oszillierens der Eisstück-Bildungsschale (128) das Hin- und Heroszillieren der Eisstück-Bildungsschale (128) beinhaltet, so dass Wasser über die Trennwände (144) zwischen den Eisstück-Herstellungsfächern (142) und nicht aus der Eisstück-Bildungsschale (128) austritt, und wobei die Haube (116) der Eisstück-Bildungsschale (128) einen bogenförmigen Querschnitt entlang im Wesentlichen ihrer gesamten Länge aufweist; und
wobei die Heizung (112) auf einer Eisstück-Bildungsschale (128) positioniert ist, die der Seite der Eisstück-Bildungsschalenabdeckung (116) zugewandt ist, und wobei der Temperatursensor (114) die Temperatur des Luftvolumens in der Nähe der Eisstück-Bildungsschalenabdeckung (116) erfasst und funktionell mit einer Steuerung verbunden ist, die die Heizung (112) steuert, um die Temperatur des Luftvolumens in der Nähe der Eisstück-Bildungsschalenhaube (116) auf einer Temperatur oberhalb des Gefrierens zu halten.

## Revendications

1. Ensemble de fabrication de glace (100) comprenant :
un bac de formation de morceaux de glace (128) ayant une extrémité de mise en prise de moteur (132), une extrémité distale (134), un premier côté, un second côté et une surface inférieure et une pluralité de compartiments de fabrication de morceaux de glace (142) séparés par des parois de séparation (144) ; et une pluralité de canaux d'eau d'eau de dégivrage (150) ; et
dans lequel au moins un canal d'eau d'eau de dégivrage (150) est positionné au moins sensiblement parallèle à ou le long d'un axe de rotation (148) du bac de formation de morceaux de glace (128) et au moins un canal d'eau d'eau de dégivrage (150) est positionné le long d'au moins une de l'extrémité de mise en prise de moteur (132) et de l'extrémité distale (134) ; et
dans lequel la pluralité de canaux d'eau d'eau de dégivrage (150) se mettent en prise les uns avec les autres en communication fluidique les uns avec les autres et la pluralité de canaux d'eau d'eau de dégivrage (150) sont chacun configurés pour recevoir l'eau de dégivrage d'une pluralité de sources de froid (152) mises en prise avec la surface inférieure de la pluralité de compartiments de fabrication de morceaux de glace (142),
dans lequel les sources de froid (152) possèdent des ailettes (154) s'étendant vers le bas qui s'étendent à l'opposé de la surface inférieure de la pluralité de compartiments de fabrication de morceaux de glace (142),
l'ensemble de fabrication de glace comprenant en outre un couvercle de bac de formation de morceaux de glace (116) espacé d'une certaine distance au-dessus du bac de formation de morceaux de glace (128), dans lequel le couvercle de bac de formation de morceaux de glace (116) comprend un élément chauffant (112) et un détecteur de température (114),
et dans lequel un bac de vidange ou de récupération d'eau de dégivrage est positionné à au moins une de l'extrémité distale (134) et de l'extrémité de mise en prise de moteur (132), les canaux d'eau (150) distribuant l'eau de dégivrage audit bac de vidange ou de récupération.

2. Ensemble de fabrication de glace (100) selon la revendication 1, dans lequel le couvercle de bac de formation de morceaux de glace (116) a une section transversale de forme courbe le long de sa longueur.

3. Ensemble de fabrication de glace (100) selon la revendication 2, dans lequel le couvercle de bac de formation de morceaux de glace (116) a une partie d'une forme cylindrique avec un côté ouvert orienté vers le bac de formation de morceaux de glace (128) et dans lequel l'élément chauffant (112) est positionné sur un côté orienté vers le bac de formation de morceaux de glace (128) du couvercle de bac de formation de morceaux de glace (116).

4. Ensemble de fabrication de glace (100) selon la revendication 3 dans lequel le détecteur de température (114) est associé au couvercle de bac de formation de morceaux de glace (116) et configuré pour détecter une température d'air retenu sous le côté orienté vers le bac de formation de morceaux de glace (128) du couvercle de bac de formation de morceaux de glace (116) et, conjointement à l'élément chauffant (112), maintenir la température d'air retenu sous le couvercle de bac de formation de morceaux de glace (116) à une température supérieure à la congélation permettant ainsi à l'ensemble de fabrication de glace (100) de former des morceaux de glace au moins sensiblement transparents dans les compartiments de fabrication de morceaux de glace (142).

5. Ensemble de fabrication de glace (100) selon la revendication 4, dans lequel le bac de formation de morceaux de glace (128) est fabriqué à partir d'un plastique et les sources de froid (152) et les ailettes (154) sont en métal et dans lequel la partie (118) de la forme cylindrique est environ une moitié d'une forme cylindrique.

6. Ensemble de fabrication de glace (100) selon la revendication 5, dans lequel le bac de formation de morceaux de glace (128) est suffisamment flexible pour libérer des morceaux de glace des compartiments de fabrication de morceaux de glace (142) du bac de formation de morceaux de glace (128) lorsqu'il est inversé et vrillé.

7. Ensemble de fabrication de glace (100) selon la revendication 1 dans lequel le détecteur de température (114) associé au couvercle de bac de formation de morceaux de glace (116) est configuré pour détecter une température d'air retenu sous le côté orienté vers le bac de formation de morceaux de glace (128) du couvercle de bac de formation de morceaux de glace (116) et comprenant en outre un moteur oscillant en prise avec au moins l'extrémité de mise en prise de moteur (132) du bac de formation de morceaux de glace (128) configuré pour faire tourner le bac de formation de morceaux de glace (128) d'avant en arrière pendant que les morceaux de glace sont en cours de formation et également d'au moins environ 160 degrés d'une position horizontale d'origine, où les compartiments de fabrication de morceaux de glace (142) sont orientés vers le haut, à une position inversée de libération des morceaux de glace où le bac de formation de morceaux de glace (128) est vrillé et les morceaux de glace libérés des compartiments (142) et distribués.

8. Ensemble de fabrication de glace (100) selon la revendication 1, dans lequel les ailettes (154) des sources de froid (152) forment des canaux d'écoulement d'air sous les compartiments de fabrication de morceaux de glace (142) entre le premier côté et le second côté du bac de formation de morceaux de glace (128).

9. Procédé de fabrication de morceaux de glace comprenant les étapes de :
fourniture d'un ensemble de fabrication de glace (100) comprenant :
un moteur ;
un bac de formation de morceaux de glace (128) ayant une extrémité de mise en prise de moteur (132), une extrémité distale (134), un premier côté, un second côté et une surface inférieure ; et une pluralité de compartiments de fabrication de morceaux de glace (142) séparés par des parois de séparation (144) ;
une pluralité de sources de froid (152) en métal mises en prise avec la surface inférieure des compartiments de fabrication de morceaux de glace (142), dans lequel les sources de froid (152) ont une pluralité d'ailettes en métal (154) s'étendant vers le bas et espacées les unes des autres qui s'étendent à l'opposé de la surface inférieure de chaque compartiment de fabrication de morceaux de glace (142) ;
au moins un canal d'eau d'eau de dégivrage (150)
dans lequel l'au moins un canal d'eau d'eau de dégivrage (150) est positionné au moins sensiblement parallèle à ou le long d'un axe de rotation (148) du bac de formation de morceaux de glace (128) et le long d'au moins une de l'extrémité de mise en prise de moteur (132) et de l'extrémité distale (134) dans lequel les canaux d'eau d'eau de dégivrage (150) se mettent chacun en prise les uns avec les autres et sont en communication fluidique les uns avec les autres ;
le placement d'un couvercle de bac de formation de morceaux de glace (116) à une certaine distance espacée au-dessus de et recouvrant le bac de formation de morceaux de glace (128) dans lequel le couvercle de bac de formation de morceaux de glace (116) inclut un élément chauffant (112) et un détecteur de température (114) ;
le remplissage d'au moins un des compartiments de fabrication de morceaux de glace (142) d'une quantité d'eau ;
l'oscillation du bac de formation de morceaux de glace (128) ;
l'utilisation du détecteur de température (114) et de l'élément chauffant (112) pour maintenir une température d'air au-dessus des compartiments de fabrication de morceaux de glace (142) au-dessus de la congélation pendant au moins une partie (118) du temps nécessaire à la formation des morceaux de glace ;
le déplacement d'air en dessous de 0 degré Celsius à travers des espaces entre la pluralité d'ailettes en métal (154) s'étendant vers le bas espacées les unes des autres ;
la formation d'un ou plusieurs morceaux de glace dans les compartiments de fabrication de morceaux de glace (142) préalablement remplis d'eau directionnellement avec la congélation commençant à partir d'une partie (118) des compartiments de fabrication de morceaux de glace (142) distale du couvercle de bac de formation de morceaux de glace (116) et proche de la source de froid (152) et vers un sommet des compartiments de fabrication de morceaux de glace (142) ;
la rotation du bac de formation de morceaux de glace (128) avec un ou plusieurs morceaux de glace formés espacés dans les un ou plusieurs compartiments de fabrication de morceaux de glace (142) qui ont été remplis d'eau pour inverser le bac de formation de morceaux de glace (128) jusqu'à ce que le bac de formation de morceaux de glace (128) soit tourné d'au moins environ 160 degrés à partir de sa position horizontale, plane, et où les compartiments de fabrication de morceaux de glace (142) sont orientés vers le haut ; et
le vrillage du bac de formation de morceaux de glace (128) pour libérer les morceaux de glace dans le bac de formation de morceaux de glace (128) ; et
dans lequel l'étape de rotation du bac de formation de morceaux de glace (128) comprend le déplacement de la pluralité d'ailettes en métal (154) s'étendant vers le bas espacées les unes des autres pour les rapprocher de la couverture (116) et dans un volume d'air proche du couvercle de bac de formation de morceaux de glace (116) qui a une température supérieure à la congélation en raison de la chaleur appliquée au volume d'air proche du couvercle de bac de formation de morceaux de glace (116) à partir de l'élément chauffant (112) de sorte que le givre sur la pluralité d'ailettes en métal (154) s'étendant vers le bas espacées les unes des autres fonde et pénètre dans au moins un canal d'eau d'eau de dégivrage (150) ;
la distribution de l'eau de dégivrage avec la pluralité de canaux d'eau d'eau de dégivrage (150) à un bac de vidange ou de récupération d'eau de dégivrage positionné à au moins une de l'extrémité distale (134) et de l'extrémité de mise en prise de moteur (132).

10. Procédé selon la revendication 9, dans lequel les morceaux de glace sont au moins sensiblement exempts d'occlusions d'air qui sont visibles à l'oeil nu,
dans lequel l'étape de vrillage du bac de formation de morceaux de glace (128) pour libérer les morceaux de glace dans le bac de formation de morceaux de glace (128) inclut le vrillage du bac de formation de morceaux de glace (128) en faisant tourner le bac de formation de morceaux de glace (128) de sorte qu'une extrémité distale (134) du bac de formation de morceaux de glace (128) se mette en prise avec une butée de bac à glace (32) à un coin d'extrémité distale (134) du bac de formation de morceaux de glace (128) pour vriller le bac de formation de morceaux de glace (128) autour de son axe de rotation (148) et libérer les un ou plusieurs morceaux de glace ;
dans lequel l'étape d'oscillation du bac de formation de morceaux de glace (128) inclut l'oscillation du bac de formation de morceaux de glace (128) d'avant en arrière de sorte que l'eau se déverse sur les parois de séparation (144) entre les compartiments de fabrication de morceaux de glace (142) et non hors du bac de formation de morceaux de glace (128) et dans lequel la couverture (116) du bac de formation de morceaux de glace (128) a une section transversale de forme courbe sensiblement le long de toute sa longueur ; et
dans lequel l'élément chauffant (112) est positionné sur un côté orienté vers le bac de formation de morceaux de glace (128) du couvercle de bac de formation de morceaux de glace (116) et dans lequel le détecteur de température (114) détecte la température du volume d'air proche du couvercle de bac de formation de morceaux de glace (116) et est connecté de manière fonctionnelle à un dispositif de commande qui commande l'élément chauffant (112) pour maintenir la température du volume d'air proche de la couverture de bac de formation de morceaux de glace (116) à une température supérieure à la congélation.
